# EUROPÄISCHE PATENTSCHRIFT

(11) **EP 1 425 153 B1**
(45) Veröffentlichungstag und Bekanntmachung des Hinweises auf die Patenterteilung: **14.03.2007**
(21) Anmeldenummer: 02772274.3
(22) Anmeldetag: 06.09.2002
(51) Int. Cl.: B29C 49/64

(54) **VORRICHTUNG ZUM ERWÄRMEN VON MIT EINEM TRAGRING VERSEHENENVORFORMLINGEN**
DEVICE FOR HEATING PREFORMS PROVIDED WITH SUPPORTING RING
DISPOSITIF DE CHAUFFAGE DE PREFORMES POURVUES D'UN ANNEAU PORTEUR

(30) Priorität: 14.09.2001 DE 10145456
(43) Veröffentlichungstag der Anmeldung: 09.06.2004
(73) Patentinhaber: KRONES AG, 93068 Neutraubling (DE)
(72) Erfinder: HERBERT, Pickel, 93073 Neutraubling (DE)
(86) Internationale Anmeldenummer: PCT/EP2002/009995
(87) Internationale Veröffentlichungsnummer: WO 2003/024693

(56) Entgegenhaltungen:
- EP-A- 1 095 756
- WO-A-01/34369
- US-A- 4 420 670
- US-A- 4 571 173
- US-A- 4 606 723

## Beschreibung

Die Erfindung betrifft eine Vorrichtung gemäß dem Oberbegriff des Anspruchs 1.

Durch die GB 2 095 611 B ist bereits eine derartige Vorrichtung bekannt, bei der die Vorformlinge in dem zwischen dem Tragring und der offenen Mündung befindlichen Kopfbereich an der Außenseite durch Haltefinger erfasst werden und die Abschirmung durch einen den Kopfbereich einschließlich des Tragrings weitgehend umgebenden zylindrischen Schutzmantel gebildet wird. Durch diesen Schutzmantel wird zwar der nicht zu verformende Kopfbereich der Vorformlinge gegen eine direkte Erwärmung durch die Heizstrahler geschützt, nicht jedoch gegen eine indirekte Erwärmung über den durch die Heizstrahler erwärmten Schutzmantel.

Entsprechendes gilt für die Vorrichtung nach der DE 39 08 345 C1, bei der die Formlinge in der Innenseite des Kopfbereichs durch in die Mündung einfahrbare, höhenbeweglich an einer Transportkette angeordnete Haltedorne erfasst werden und die Abschirmung durch fest mit der Transportkette verbundene zylindrische Schutzhülsen gebildet wird.

Durch die EP 1 095 756 B1 schließlich ist bereits eine Vorrichtung zum Erwärmen von Vorformlingen mit blendenförmigen Abschirmungen bekannt, die mittels stationärer Zylinder bei einem Stillstand des Fördermittels quer zur Transportrichtung über den Rumpfbereich der Vorformlinge geschoben werden. Die Abschirmungen weisen U-förmige Ausnehmungen für den Rumpfbereich auf, so dass jeweils zwei dreieckförmige Fenster offen bleiben, durch die die Strahlung der Heizstrahler ungehindert zum Kopfbereich der Vorfomlinge vordringen kann.

Der Erfindung liegt die Aufgabe zu Grunde, bei einer gattungsgemäßen Vorrichtung den Schutz des nicht zu verformenden Kopfbereichs der Vorformlinge gegen unerwünschte Erwärmung zu verbessern.

Diese Aufgabe wird erfindungsgemäß durch die im Kennzeichen des Anspruchs 1 angegebenen Merkmale gelöst.

Bei einer erfindungsgemäßen Vorrichtung wird der Kopfbereich der Vorformlinge durch die Blenden gegen eine direkte Erwärmung durch die Heizstrahler geschützt. Zusätzlich wird eine indirekte Erwärmung über die - nicht vorhandenen - geschlossenen Schutzhülsen vermieden und statt dessen eine aktive Kühlung des Kopf-und Gewindebereichs realisiert.

Vorteilhafte Weiterbildungen der Erfindung sind in den Unteransprüchen enthalten. Besonders zweckmäßig ist die Ausbildung nach Anspruch 2 und 3. Sie erlaubt auf Grund der durchgehenden Abschirmung durch die eine Art Band bildenden Blenden, den zu erwärmenden Bereich der Vorformlinge in einem geschlossenen Heizkanal besonders schnell und energiesparend aufzuheizen, und das in aufrechter Normalposition.

Im Nachstehenden wird ein Ausführungsbeispiel der Erfindung anhand der Zeichnungen beschrieben. Es zeigen:
- Figur 1: die schematische Draufsicht auf eine Vorrichtung zum Erwärmen von Vorformlingen
- Figur 2: den Schnitt A-B nach Figur 1
- Figur 3: den senkrechten Schnitt durch einen Reflektor der Vorrichtung nach Figur 1 und 2
- Figur 4: die Einzelheit Z nach Figur 2 in vergrößerter Darstellung.

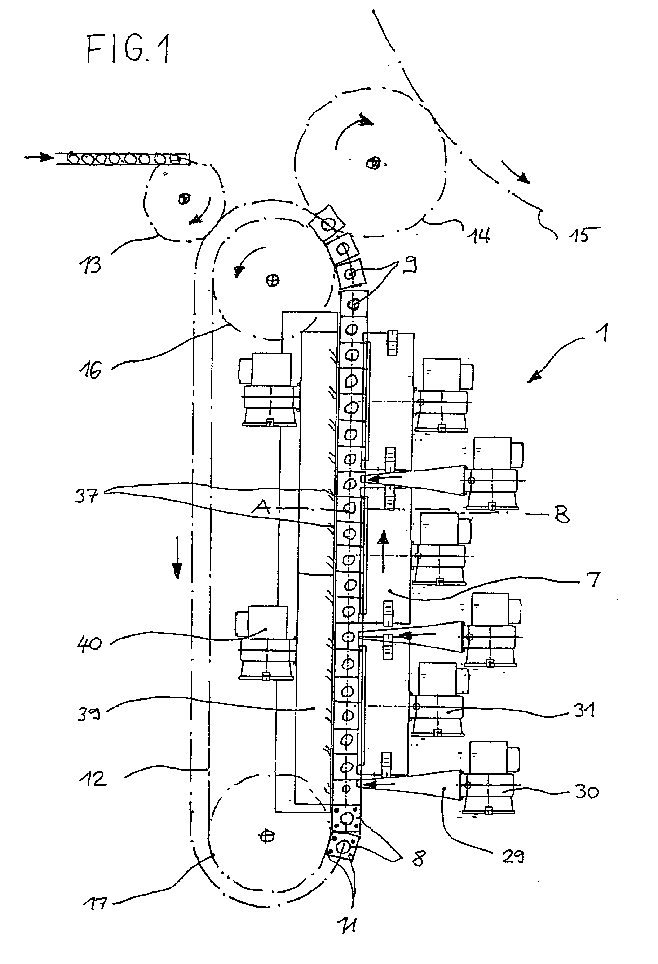

Die Vorrichtung 1 nach Figur 1 bis 4 ist zum Erwärmen von mit Raumtemperatur zugeführten Vorformlingen 2 aus PET auf die zum Streckblasen erforderliche Verarbeitungstemperatur in etwa zwischen 90° und 110°C eingerichtet. Sie ist in eine nur teilweise sowie schematisch dargestellte Streckblasmaschine mit einem Einlaufstern 13, einem Transferstern 14 und einem Blasrad 15 integriert, in der aus den erwärmten Vorformlingen 2 durch Streckblasen Hohlkörper in Form von Getränkeflaschen hergestellt werden.

Die am Boden geschlossenen Vorformlinge 2 weisen in ihrem oberen Bereich einen Tragring 3 auf, wobei der zwischen der offenen Mündung 4 und dem Tragring 3 befindliche Kopf 5 ein Außengewinde trägt und bereits seine Endform aufweist. Der Kopf 5 nimmt am Streckblasvorgang nicht teil und darf daher zur Vermeidung unerwünschter Verformungen keinesfalls bis in die Nähe der Verarbeitungstemperatur erwärmt werden.

Die Vorrichtung 1 weist eine endlose Förderkette 12 mit einer Vielzahl gleichartiger, durch Bolzen gelenkig miteinander verbundener Kettenglieder 12a mit seitlich abstehenden Ansätzen 12b auf, die über ein Antriebsrad 16 und ein Umlenkrad 17 in einer horizontalen Ebene umläuft. Zwischen Antriebsrad 16 und Umlenkrad 17 sind zwei parallele, lineare Umlaufbereiche ausgebildet, in denen die Kettenglieder 12a mittels drehbar an ihnen gelagerten Rollen 18 und stationären Schienen 19 exakt geführt sind.

In mindestens einem der beiden linearen Umlaufbereiche sind an der Bewegungsbahn der von der Förderkette 12 getragenen Vorformlinge 2 mehrere gleichartige stationäre Heizkästen 7 angeordnet, die jeweils mit mehreren horizontal ausgerichteten röhrenförmigen Infrarotstrahlern 36 ausgestattet sind.

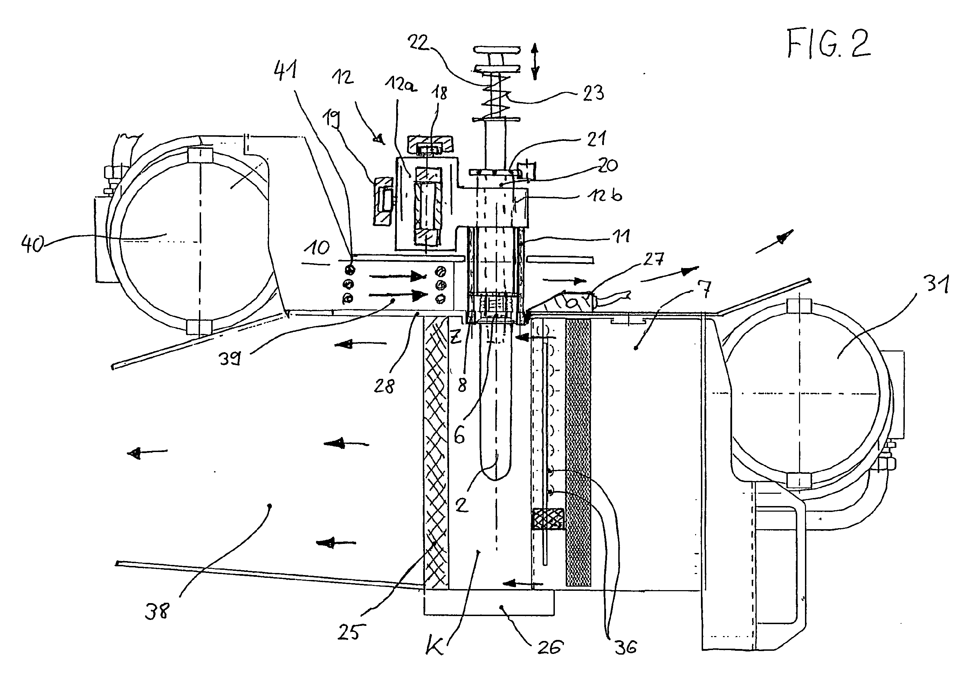

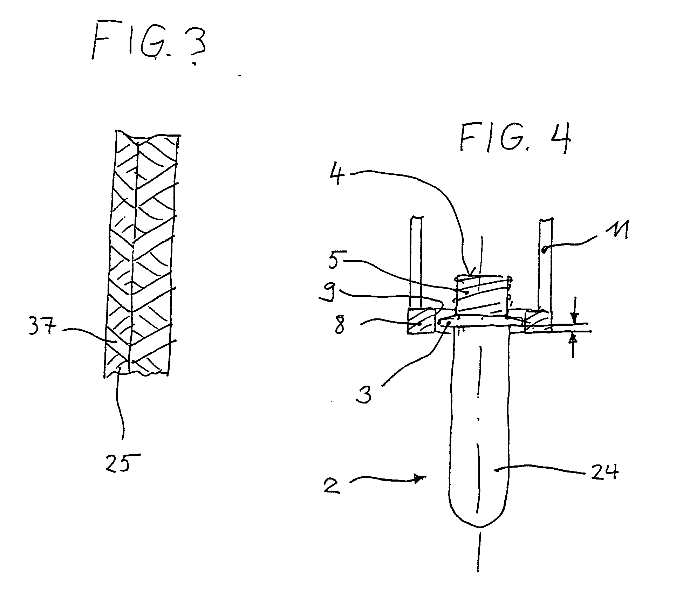

In jedem Ansatz 12b der Förderkette 12 ist eine Hülse 20 mit senkrechter Drehachse gelagert, die drehfest mit einem Zahnrad 21 verbunden ist. Dieses kämmt mit einer stationären Zahnstange oder einer endlos umlaufenden Rollenkette 21 und versetzt die Hülse 20 in kontinuierliche Eigenrotation, wenn die Förderkette 12 kontinuierlich umläuft. In jeder Hülse 20 ist ein Haltedorn 6 drehfest, jedoch höhenverschieblich aufgenommen. Der Haltedorn 6 ragt an der Unterseite der Hülse 20 heraus und ist starr mit einer am oberen Ende der Hülse 20 herausragenden Steuerstange 22 verbunden. Zwischen das verbreiterte Ende der Steuerstange 22 und der Hülse 20 ist eine Druckfeder 23 eingesetzt, die den Haltedorn 6 in seine in Figur 2 und 4 gezeigte obere Endposition drückt, die durch nicht gezeigte Anschläge definiert ist. Mit Hilfe der Steuerstange 22 und nicht gezeigter stationärer Kurvenrampen kann der Haltedorn 6 entgegen der Kraft der Druckfeder 23 in seine in Figur 2 strichpunktiert angedeutete untere Endposition verfahren werden. Diese Hubbewegung dient zum Einführen des mit einem Federring ausgestatteten Haltedorns in die offene Mündung 4 des Vorformlings 2 im Bereich des Einlaufsterns 13 bzw. zum Herausziehen aus der Mündung 4 im Bereich des Transfersterns 14.

An der Unterseite jedes Ansatzes 12b der Förderkette 12 ist mit Abstand mittels vier dünner, senkrechter Stangen 11 eine horizontale Blende 8 mit quadratischem Umfang befestigt. Die Blende 8 besteht aus einem im Wesentlichen ebenen Stück Blech von mehreren Millimetern Dicke oder aus einem profilierten Formteil und weist eine zentrale Bohrung 9 auf, die konzentrisch zur Hülse 20 und zum Haltedorn 6 liegt. Der Durchmesser der Bohrung 9 ist geringfügig größer als der Außendurchmesser des Tragrings 3. Die Höhe und Dicke der Blenden 8 ist derart gewählt, dass der Tragring 3 eines Vorformlings 1 mit einem geringen Abstand von z. B. 2 bis 3mm zur Unterseite der Blende mittig in der Bohrung 9 liegt und der größte Teil des Kopfs 5 über der Oberseite der Blende 8 heraussteht und so zwischen den vier Stangen 11 hindurch praktisch von allen Seiten her frei zugänglich ist, wenn der Haltedorn 6 mit dem aufgesteckten Vorformling 2 seine obere Endposition einnimmt (siehe Fig. 4). In der unteren Endposition dagegen befindet sich ein vom Haltedorn 6 zu erfassender oder freizugebender Vorformling 2 mit seiner Mündung 4 mit etwas Abstand unterhalb der Blende 8.

Die an der Außenseite des linearen Umlaufbereichs der Förderkette 12 in einer Linie angeordneten Heizkästen 7 bilden zusammen mit an der Innenseite des linearen umlaufbereichs in einer Linie angeordneten plattenförmigen, keramischen Reflektoren 25 und einer keramischen Bodenplatte 26 einen linearen Heizkanal K, in den die in aufrechter Normalposition transportierten Vorformlinge 2 von oben her mit ihrem zu verformenden Rumpfbereich 24 hineinragen. Auch nach oben hin ist der Heizkanal K durch die einander berührenden oder mit geringem Abstand gegenüberliegenden Blenden 8, die ein umlaufendes Blendenband bilden, in Verbindung mit einem linearen, mit Wasser durchflossenen Kühlschild 27 auf der Seite der Heizkästen 7 und einem Leitblech 28 auf der Seite der Reflektoren 25 weitestgehend geschlossen. Die aufeinander zuweisenden, geradlinigen Kanten des Kühlschilds 27 und des Leitblechs 28 verlaufen parallel zueinander und weisen einen kleinen Abstand zu den Blenden 8 auf oder berühren diese. Durch die Ausbildung eines allseitig geschlossenen Heizkanals K für den zu verformenden Rumpfbereichs 26 unterhalb des Tragrings 3 der Vorformlinge 2 wird eine äußerst effektive und energiesparende Erwärmung ermöglicht.

Um eine Überhitzung der Oberfläche der Vorformlinge 2 zu vermeiden, sind zwischen den Heizkästen 7 schmale Schlitzdüsen 29 mit angeschlossenen Gebläsen 30 vorgesehen, die Raumluft konzentriert auf die Oberfläche der vorbeirotierenden Vorformlinge 2 blasen. Außerdem ist an der Außenseite jedes Heizkastens 7 ein Kühlgebläse 31 angeschlossen, das zur Kühlung der Infrarotstrahler 36 dient. Die Abfuhr der durch die Gebläse 30 und 31 in den Heizkanal K mit Überdruck eingeleiteten Luft erfolgt durch zwischen den einzelnen Reflektoren 25 ausgebildete senkrechte, spaltenförmige Öffnungen 37. Die Öffnungen 37 sind entweder, wie in Fig. 1 gezeigt, einfach gegenüber der Strahlungsrichtung der Infrarotstrahlern 7a schräggestellt oder, wie in Fig. 3 dargestellt ist, zweifach schräg gestellt. Auf diese Weise wird verhindert, dass die von den Infrarotstrahlern 36 ausgehende Wärmestrahlung direkt durch die Öffnungen 37 entweichen kann. Die Öffnungen 37 münden in einen Sammelkanal 38 ein, durch den die erwärmte, von den Gebläsen 30, 31 stammende Luft aus dem Heizkanal K gezielt aus der Vorrichtung 1 abgeleitet wird.

Auf Grund der vorbeschriebenen Anordnung liegt der Kopf 5 der Vorformlinge 2 vollständig außerhalb des Heizkanals K und ist durch die von der Förderkette 12 getragenen Blenden 8 gegen eine direkte Erwärmung durch die Infrarotstrahler 7a optimal geschützt. Um auch jegliche indirekte Erwärmung durch erwärmte Vorrichtungsteile usw. zu verhindern, ist für die Köpfe 5 eine eigene Kühleinrichtung 10 vorgesehen. Diese weist eine oder mehrere an der Innenseite des linearen Umlaufbereichs der Förderkette 12 angeordnete Düsen 39 auf, die durch Gebläse 40 mit Umgebungsluft versorgt werden. Erforderlichenfalls ist in den Düsen 39 ein Wärmetauscher 41, der von einem Kühlmittel durchflossen ist, angeordnet. Durch die Kühleinrichtung 10 wird eine intensive Kühlung des weitgehend frei zugänglichen Kopfs 5 der Vorformlinge 2 bewirkt. Außerdem werden hierdurch die benachbarten Teile der Vorrichtung 1 wie Haltedorne 6 usw. mit gekühlt. Die Luftführung erfolgt durch entsprechende Leitbleche im Gegenstrom zur Luftführung im Heizkanal K, teilweise auch durch den Kühlschild 27.

Die erfindungsgemäßen Blenden sind in gleicher Weise bei Vorformlingen einsetzbar, bei denen der Tragring nicht an einem abstehenden Halskragen, sondern an einer vertieften Ringnut, einer speziell geformten Übergangsstelle zwischen Kopf und Rumpf usw. ausgebildet ist. Wichtig ist allein, dass die Blende an der Trennstelle zwischen dem zu verformenden und dem nicht zu verformenden Bereich der Vorformlinge angeordnet ist.

Erfolgt das Aufheizen der Vorformlinge, wie im Ausführungsbeispiel gezeigt, in aufrechter Normalposition, so verhindern die erfindungsgemäßen Blenden auch eine Erwärmung des Kopfbereichs durch aus dem Heizkanal aufsteigende Warmluft. Die Vorformlinge können daher problemlos in ihrer Normalposition, ohne vorheriges Wenden um 180°, erwärmt werden.

## Patentansprüche

1. Vorrichtung (1) zum Erwärmen von einen Tragring (3) aufweisenden Vorformlingen (2) aus thermoplastischem Kunststoff für das Blasformen von Hohlkörpern, mit einem Fördermittel, mehreren an dem Fördermittel angeordneten, den Kopfbereich der Vorformlinge zwischen Tragring und Mündung (4) erfassenden Haltemitteln und an der Bewegungsbahn der von den Haltemitteln getragenen Vorformlinge angeordneten Heizstrahlern (36), wobei jedem Haltemittel eine vom Fördermittel getragene Abschirmung zum Schutz des zwischen Tragring und Mündung befindlichen Kopfbereichs der Vorformlinge gegen Erwärmung zugeordnet ist, **dadurch gekennzeichnet, dass** jede Abschirmung durch eine auf Höhe des Tragrings (3) liegende Blende (8) mit einer den Tragring (3) mit geringem Abstand umgebenden Bohrung (9) gebildet wird, die den Kopfbereich des Vorformlings (2) weitgehend freilässt, dass jede Blende (8) scheibenartig ausgebildet ist und durch mindestens eine Stange (11) mit dem Fördermittel verbunden ist und dass eine auf den freigelassenen Kopfbereich des Vorformlings (2) einwirkende Kühleinrichtung (10) vorgesehen ist.

2. Vorrichtung nach Anspruch 1, **dadurch gekennzeichnet, dass** das Fördermittel durch eine endlose Förderkette (12) mit mindestens einem linearen Umlaufbereich gebildet wird, in dem die Heizstrahler (36) angeordnet sind, und dass die Blenden (8) einen rechteckigen oder quadratischen Umfang aufweisen und im linearen Umlaufbereich der Förderkette (12) sich benachbarte Blenden (8) berühren oder mit geringem Abstand gegenüberliegen.

3. Vorrichtung nach Anspruch 2, **dadurch gekennzeichnet, dass** die Vorformlinge (2) in aufrechter Normalposition mit nach oben weisender Mündung an Haltedornen (6) frei hängend transportierbar sind und mit ihrem zu verformenden Rumpfbereich (24) in einen Heizstrahler (36) und gegenüberliegende Reflektoren (25) unfassenden Heizkanal (K) eintauchen, der nach oben hin durch die Blenden (8) abgedeckt ist.

4. Vorrichtung nach Anspruch 3, **dadurch gekennzeichnet, dass** an den Heizkanal (K) auf Seite der Heizstrahler (36) mehrere Kühlgebläse (30, 31) angeschlossen sind und dass auf Seite der Reflektoren (25) Öffnung (37) zur Abfuhr der Kühlluft aus dem Heizkanal (K) vorgesehen sind.

5. Vorrichtung nach einem der Ansprüche 1 bis 4, **dadurch gekennzeichnet, dass** die Kühleinrichtung (10) mindestens eine auf den Kopf (5) der Vorformlinge (2) gerichtete Blasluftdüse (39) aufweist.

6. Vorrichtung nach Anspruch 5, **dadurch gekennzeichnet, dass** in der Blasluftdüse (39) ein von einem Kühlmittel durchflossener Wärmetauscher (41) angeordnet ist.

7. Vorrichtung nach einem der Ansprüche 1 bis 6, **dadurch gekennzeichnet, dass** die Haltemittel von höhenbeweglich an dem Fördermittel angeordneten Haltedornen (6) gebildet werden, die in die Mündung (4) der Vorformlinge (2) einfahrbar sind.

## Claims

1. Apparatus (1) for heating preforms (2), which have a supporting ring (3) and are made of a thermoplastic material, for the blow moulding of hollow bodies, said apparatus comprising conveying means, a plurality of holding devices disposed on the conveying means for gripping the head portion of the preforms between supporting ring and mouth (4), and radiant heaters (36) which are disposed along the path of movement of the preforms carried by the holding devices, in which case a shield carried by the conveying means for protecting the head portion lying between supporting ring and mouth of the preform from the heating process is associated with each holding device, **characterized in that** each shield takes the form of a screen (8) disposed level with the supporting ring (3) and having a hole (9) encircling the supporting ring (3) at a small distance therefrom in such a way as to leave the head portion of the preform (2) substantially free, **in that** each screen (8) takes the form of a disc and is attached by at least one rod (11) to the conveying means, and **in that** a cooling device (10) is provided which acts on the free head portion of the preform (2).

2. Apparatus according to Claim 1, **characterized in that** the conveying means are formed by an endless conveying chain (12) having at least one linear rotating section in which the radiant heaters (36) are disposed, and **in that** the screens (8) have a rectangular or square perimeter and, in the linear rotating section of the conveying chain (12), adjacent screens (8) are in contact with one another or else face one another with a small distance between them.

3. Apparatus according to Claim 2, **characterized in that** the preforms (2) can be transported in a normal upright position, freely suspended from holding mandrels (6), with the mouth of the preform facing upwards and with the body portion (24) to be moulded inserted in a heating duct (K) comprising radiant heaters (36) and reflectors (25) located opposite one another, said heating duct (K) being covered at the top by the screens (8).

4. Apparatus according to Claim 3, **characterized in that** a plurality of cooling blowers (30, 31) are connected to the heating duct (K) on the side of the radiant heaters (36), and **in that** openings (37) are provided on the side of the reflectors (25) for removing the cooling air from the heating duct (K).

5. Apparatus according to one of Claims 1 to 4, **characterized in that** the cooling device (10) has at least one air-blast nozzle (39) directed at the head (5) of the preform (2).

6. Apparatus according to Claim 5, **characterized in that** a heat exchanger (41), through which a coolant flows, is disposed in the air-blast nozzle (39).

7. Apparatus according to one of Claims 1 to 6, **characterized in that** the holding devices take the form of holding mandrels (6) which are disposed on the conveying means in such a way as to be height-adjustable and which can be inserted into the mouths (4) of the preforms (2).

## Revendications

1. Dispositif (1) de chauffage de préformes (2) en matière thermoplastique, pour moulage par soufflage de corps creux, et pourvues d'un anneau porteur (3) ce dispositif comprenant un moyen de transport, plusieurs moyens de maintien disposés sur ce moyen de transport et saisissant la zone de tête des préformes située entre l'anneau porteur et l'embouchure (4), ainsi que des radiateurs de chauffage (36) disposés sur la trajectoire des préformes portées par les moyens de maintien, et dont chaque moyen de maintien a un organe associé porté par le moyen de transport et destiné à assurer la protection contre l'échauffement, de la zone de tête des préformes située entre l'anneau porteur et l'embouchure,
**caractérisé en ce que**
chaque organe de protection est constitué par un écran (8) disposé à la hauteur de l'anneau porteur (3) et présentant un perçage (9) entourant à une faible distance cet anneau porteur en laissant largement libre la rondelle reliée par au moins une tige (11) au moyen de transport, et un dispositif de refroidissement (10) agit sur la zone de tête laissée libre de la préforme (2).

2. Dispositif selon la revendication 1,
**caractérisé en ce que**
le moyen de transport est une chaîne transporteuse (12) sans fin présentant au moins une partie linéaire dans laquelle sont disposés les radiateurs de chauffage (36), les écrans (8) présentent un contour rectangulaire ou carré et, sur la partie linéaire de la chaîne transporteuse (12), les écrans voisins se touchent ou sont faiblement espacés.

3. Dispositif selon la revendication 2,
**caractérisé en ce que**
les préformes (2), dans leur position dressée normale avec leur embouchure dirigée vers le haut, peuvent être transportées en étant librement suspendues à des broches de maintien (6), et ont leur zone de corps (24) à déformer, qui plongent dans un canal de chauffage (K) comprenant un radiateur de chauffage (36) et des réflecteurs (25) qui lui font face, ce canal étant obturé vers le haut par les écrans (8).

4. Dispositif selon la revendication 3,
**caractérisé en ce qu'**
au canal de chauffage (K), du côté du radiateur de chauffage (36), sont raccordées plusieurs soufflantes de refroidissement (30, 31), tandis que du côté des réflecteurs (25) sont prévues des ouvertures (37) pour l'évacuation de l'air de refroidissement sortant du canal de chauffage (K).

5. Dispositif selon une des revendications 1 à 4,
**caractérisé en ce que**
le dispositif de refroidissement (10) présente au moins une tuyère d'air de soufflage (39) dirigée sur la tête (5) de la préforme (2).

6. Dispositif selon la revendication 5,
**caractérisé en ce que**
dans la tuyère d'air de soufflage (39) est monté un échangeur thermique (41) traversé par un agent de refroidissement.

7. Dispositif selon une des revendications 1 à 6,
**caractérisé en ce que**
les moyens de maintien sont constitués par des broches de maintien (6) montées réglables en hauteur sur le moyen de transport et qui peuvent rentrer dans l'embouchure (4) des préformes (2).
